# EUROPÄISCHE PATENTSCHRIFT

(11) **EP 2 998 530 B1**
(45) Veröffentlichungstag und Bekanntmachung des Hinweises auf die Patenterteilung: **07.11.2018**
(21) Anmeldenummer: 15184566.6
(22) Anmeldetag: 09.09.2015
(51) Int. Cl.: F01N 3/021, F01N 13/18, B21D 39/04, F01N 3/24

(54) **VERFAHREN ZUR HERSTELLUNG EINES ABGASKONVERTERS, WERKZEUG FÜR EINE RINGPRESSE ZUR HERSTELLUNG EINES ABGASKONVERTERS, RINGPRESSE MIT DIESEM WERKZEUG UND MITTELS DER RINGPRESSE HERGESTELLTER ABGASKONVERTER**
METHOD FOR THE MANUFACTURE OF AN EXHAUST GAS CONVERTER, TOOL FOR A RING PRESS FOR THE MANUFACTURE OF AN EXHAUST GAS CONVERTER, RING PRESS COMPRISING SAID TOOL, AND EXHAUST GAS CONVERTER MAUNFACTURED WITH SAID RING PRESS
PROCEDE DE FABRICATION D'UN CONVERTISSEUR DE GAZ D'ECHAPPEMENT, OUTIL POUR UNE PRESSE ANNULAIRE DESTINEE A FABRIQUER UN CONVERTISSEUR DE GAZ D'ECHAPPEMENT, PRESSE ANNULAIRE DOTEE DUDIT OUTIL ET CONVERTISSEUR DE GAZ D'ECHAPPEMENT FABRIQUE A L'AIDE DE LA PRESSE ANNULAIRE

(30) Priorität: 19.09.2014 DE 102014218960
(43) Veröffentlichungstag der Anmeldung: 23.03.2016
(73) Patentinhaber: Eberspächer Exhaust Technology GmbH & Co. KG, 66539 Neunkirchen (DE)
(72) Erfinder: Martin, Herbert, 15537 Erkner (DE); Rudolph, Karsten, 01259 Dresden (DE); Manicke, Daniel, 01157 Dresden (DE)
(74) Vertreter: Diehl & Partner GbR

(56) Entgegenhaltungen:
- EP-B1- 1 882 089
- EP-B1- 2 324 218
- WO-A1-2011/011893
- JP-A- 2004 358 494

## Beschreibung

Die vorliegende Erfindung betrifft ein Verfahren zur Herstellung eines Abgaskonverters gemäß dem Oberbegriff des Anspruchs 1, sowie einen Abgaskonverter gemäß dem Oberbegriff des Anspruchs 9, wie er mittels einer Ringpresse hergestellt werden kann. Weiter betrifft die vorliegende Erfindung eine Ringpresse und ein spezielles Werkzeug gemäß dem Oberbegriff des Anspruchs 2 für diese Ringpresse.

Bei der Herstellung von Abgaskonvertern ist es häufig erforderlich, ein Substrat in einem Metallmantel anzuordnen. Bei dem Substrat kann es sich beispielsweise um einen Metallträger oder Keramikträger handeln. Beispielsweise kann es sich bei dem Substrat um ein monolithisches Substrat handeln. Beispielsweise kann das Substrat zwei axiale Enden aufweisen, die in einer Gasströmungsrichtung, in welcher zu reinigendes Abgas das Substrat durchströmt, gegenüberliegen. Häufig ist dabei zwischen dem Substrat und dem Metallmantel eine Lagerungsmatte vorgesehen. Dieser Vorgang der Anordnung des Substrates in dem Metallmantel wird auch als "Canning" bezeichnet. Ziel des Canning ist es, das Substrat zuverlässig im Inneren des Metallmantels zu positionieren. Dabei ist eine Beschädigung des Substrates zu vermeiden. Zu derartigen Abgaskonvertern gehören auch Abgaskatalysatoren.

Hierfür sind unterschiedliche Canning-Verfahren bekannt:
Beim Stopf-Canning-Verfahren wird das Substrat mit der das Substrat umgebenden Lagerungsmatte in ein Metallrohr geschoben. Anschließend wird an beiden Enden des Metallrohres eine Anschlussgeometrie angeformt, welche verhindert, dass das Substrat mit der Lagerungsmatte wieder aus dem Metallrohr rutscht. Nachteilig an diesem Verfahren ist, dass ein relativ großes Spiel zwischen einer Innenwand des Metallrohres und einer Außenfläche der das Substrat umgebenden Lagerungsmatte bestehen muss, damit das Substrat mit der Lagerungsmatte ohne Beschädigung der Lagerungsmatte im Metallrohr angeordnet werden kann. Weiter besteht die Gefahr, dass dieses Spiel in Folge einer späteren Verdichtung der Lagerungsmatte im Betrieb weiter zunimmt.

Beim Wickel-Canning-Verfahren wird das Substrat mit der das Substrat umgebenden Lagerungsmatte mit einem Blechstreifen umwickelt. Die Umfangslinien des Blechstreifens werden miteinander luftdicht verbunden. Bei diesem Verfahren ist es nachteilig, dass es in der Herstellung sehr aufwändig ist. Zudem verbleiben lange Nähte, deren Dichtigkeit sicherzustellen ist.

Beim Shrink-Canning-Verfahren wird das Substrat mit der das Substrat umgebenden Lagerungsmatte in ein Rohrstück geschoben und anschließend das Rohrstück von außen kalibriert. Anschließend wird an beiden Enden des Metallrohres eine Anschlussgeometrie angeformt, welche verhindert, dass das Substrat mit der Lagerungsmatte wieder aus dem Metallrohr rutscht. Eine Ringpresse, wie sie beim Shink-Canning-Verfahren zur Herstellung von Abgaskonvertern verwendet werden kann, ist aus der WO 2011/011893 A1 bekannt. Alternativ zu der Verwendung einer Ringpresse ist aus der US 7,316,142 B2 ein sogenanntes "spin forming"-Verfahren bekannt. Beim "spin-forming"-Verfahren wird das Metallrohr rotiert und gleichzeitig mit wenigstens einem feststehenden Drückwerkzeug mit Druck beaufschlagt. Dieses Drückwerkzeug kann währenddessen zudem in axialer Richtung des Metallrohres verfahren werden. Für das "spin-forming"-Verfahren ist kennzeichnend, dass das Drückwerkzeug auf der Außenseite des Metallrohres abrollt.

Aus dem Dokument EP 2 324 218 B1 sind die Merkmale der Oberbegriffe der unabhängigen Ansprüche bekannt.

Beim Halbschalen-Canning-Verfahren wird das Substrat mit der das Substrat umgebenden Lagerungsmatte zwischen Halbschalen aus Metallblech gelegt. Anschließend werden die Halbschalen in einer Presse verschlossen. Dabei ist es nachteilig, dass relativ lange Nahte verbleiben, deren Dichtigkeit sicherzustellen ist.

Bei den vorstehend beschriebenen Canning-Verfahren ist es nachteilig, dass sie entweder aufwändig sind, aufgrund langer Nahtlängen problematisch hinsichtlich ihrer Zuverlässigkeit sind oder zwischen dem Metallmantel und dem von der Lagerungsmatte umgebenen Substrat ein zu großes Spiel besteht.

Es ist Aufgabe der vorliegenden Erfindung, ein Verfahren zur Herstellung eines Abgaskonverters, eine für die Durchführung des Verfahrens geeignete Ringpresse, ein für die Ringpresse geeignetes Werkzeug sowie einen mittels der Ringpresse hergestellten Abgaskonverter bereitzustellen, welche die Herstellung eines Abgaskonverters mit geringem Aufwand erlauben. Weiter soll der so hergestellte Abgaskonverter ein geringes Spiel zwischen Metallmantel und Substrat aufweisen, und durch Vermeidung langer Nahten zuverlässig sein.

Die vorstehende Aufgabe wird durch die Merkmale der unabhängigen Ansprüche gelöst. Bevorzugte Ausführungsformen finden sich in den Unteransprüchen.

Ausführungsformen eines Verfahren zur Herstellung eines Abgaskonverters weisen die Schritte des Bereitstellens eines zylindrischen Metallrohres, des Bereitstellens eines zylindrischen Substrates, welches in Umfangsrichtung von einer Lagerungsmatte umhüllt ist, wobei der Querschnitt des Substrates einschließlich der Lagerungsmatte kleiner oder gleich dem Querschnitt des Metallrohres ist, des Anordnens des Substrates mit der das Substrat umgebenden Lagerungsmatte in dem Metallrohr und des Beaufschlagens des Metallrohres mit Druckkraft, welche Druckkraft in radialer Richtung des Metallrohres orientiert ist, um den Querschnitt des Metallrohres auf ein vorgegebenes Maß zu verkleinern, auf. Dabei wechseln sich im Schritt des Beaufschlagens des Metallrohres mit Druckkraft in wenigstens eines von der Umfangsrichtung und der axialen Richtung des Metallrohres Bereiche, die mit Druckkraft beaufschlagt werden und Bereiche, die nicht mit Druckkraft beaufschlagt werden, ab. Weiter ist die Anzahl der Bereiche, in denen das Metallrohr nicht mit Druckkraft beaufschlagt wird, größer als die Anzahl der für die Druckbeaufschlagung verwendeten Werkzeuge.

Da das Metallrohr vor der Druckbeaufschlagung einen größeren Querschnitt als das Substrat einschließlich der Lagerungsmatte aufweist, kann das Substrat mit der das Substrat umgebenden Lagerungsmatte leicht im Inneren des Metallrohres angeordnet werden. Infolge des verkleinerten Querschnitts des Metallrohres nach der Druckbeaufschlagung ist das Substrat über die das Substrat umgebende Lagerungsmatte sicher im Metallrohr des Abgaskonverters gelagert. Dabei kann auch eine spätere Verdichtung der Lagerungsmatte infolge einer Temperatureinwirkung berücksichtigt werden. Das Metallrohr stellt so eine Gehäusewand (einen Metallmantel) des Abgaskonverters bereit und schützt das Substrat vor mechanischen und chemischen Einflüssen von außen. Ein gewünschter Querschnitt des Metallrohres kann durch die Druckbeaufschlagung maßgenau sichergestellt werden. Da die Anzahl der Bereiche, in denen das Metallrohr nicht mit Druckkraft beaufschlagt wird, größer als die Anzahl der für die Druckbeaufschlagung verwendeten Werkzeuge ist, weist wenigstens eines der für die Druckbeaufschlagung verwendeten Werkzeuge mehr als einen Bereich auf, in dem das Werkzeug mit dem unter Druck zu setzenden Metallrohr in Anlage kommt. In der Folge wird eine Reibung zwischen dem Metallrohr und dem Werkzeug reduziert, was ein Abgleiten des Metallrohrs gegenüber dem Werkzeug während der Druckbeaufschlagung und im Ergebnis eine bessere Verteilung des infolge des Druckes verdrängten Materials des Metallrohres erlaubt.

Gemäß einer Ausführungsform ist das Metallrohr während der Beaufschlagung mit Druckkraft in Ruhe und wird somit nicht um seine Längsachse rotiert. Gemäß einer Ausführungsform rotieren auch die das Metallrohr mit Druck beaufschlagenden Werkzeuge nicht.

Gemäß einer Ausführungsform weist das zylindrische Metallrohr einen kreisförmigen Querschnitt auf. Gemäß einer alternativen Ausführungsform weist das zylindrische Metallrohr einen ovalen Querschnitt auf.

Das Metallrohr kann beispielsweise aus Edelstrahl bestehen. Das Metallrohr kann beispielsweise einen Durchmesser von zwischen 200 mm und 400 mm und eine Länge von bis zu 400 mm aufweisen. Die Wandstärke des Metallrohres kann beispielsweise zwischen 0,3 mm und kleiner 1 mm und/oder zwischen 1 mm und 3 mm betragen. Gemäß einer Ausführungsform ist die Wandstärke des Metallrohres über den ganzen Umfang und die ganze Länge des Metallrohres konstant.

Die Lagerungsmatte kann beispielsweise aus Hochtemperaturwolle (z. B. aus Erdalkalisilikatwolle, Aluminiumsilikatwolle oder polykristalline Wolle mit einem Al2O3-Gehalt > 70 Gew.-%) bestehen, und eine thermische Isolierung zwischen dem Substrat und dem Metallrohr bereitstellen. Weiter kann die Lagerungsmatte eine gewisse Dämpfungswirkung bereitstellen und so vermeiden, dass das häufig spröde Substrat infolge mechanischer Stöße beschädigt wird.

Bei dem Substrat kann es sich beispielsweise um einen Metallträger oder einen Keramikträger handeln, der einen Katalysator trägt und feine Kanäle für zu reinigendes Abgas bereitstellt.

Gemäß einer Ausführungsform wird der Querschnitt des Metallrohres in Folge der Druckbeaufschlagung um wenigstens 3 % oder um wenigstens 5 % oder um wenigstens 10 % gegenüber dem Durchmesser des Metallrohres vor der Druckbeaufschlagung verkleinert.

Gemäß einer Ausführungsform ist der Querschnitt des Metallrohres nach der Druckbeaufschlagung kleiner als der Querschnitt des Substrates einschließlich der Lagerungsmatte vor der Druckbeaufschlagung. Somit wird die Lagerungsmatte nach der Druckbeaufschlagung des Metallrohres etwas durch das Metallrohr komprimiert.

Gemäß einer Ausführungsform weist das Verfahren weiter ein Verschließen der axialen Enden des Metallrohres mit Trichtern auf, wobei die Trichter mit dem Metallrohr verschweißt, verlötet oder verbördelt werden. Durch die Druckbeaufschlagung kann der Querschnitt des Metallrohres genau in eine vorbestimmte Form gebracht werden, was geringe Toleranzen beim Anschluss der Trichter an das Metallrohr erlaubt. Geringe Toleranzen von kleiner 0,8 mm erlauben das Setzen von zuverlässigen Schweißnähten zwischen dem Metallrohr und den Trichtern.

Gemäß einer Ausführungsform weist das Verfahren weiter ein Erwärmen des Metallrohres vor dem Beaufschlagen des Metallrohres mit Druckkraft auf eine Temperatur zwischen 100°C und 600°C auf. Bei dieser Temperatur lässt sich das Metallrohr besonders leicht verformen, weist aber gleichzeitig noch eine ausreichende Stabilität auf. Alternativ kann die Beaufschlagung mit Druckkraft jedoch auch im Temperaturbereich zwischen 20°C und 100°C erfolgen.

Ausführungsformen eines Werkzeuges für eine Ringpresse weisen einen Werkzeugkörper auf. Der Werkzeugskörper kann beispielsweise aus Metall und insbesondere aus gehärtetem Werkzeugstahl gebildet sein. Der Werkzeugkörper kann massiv sein. Der Werkzeugkörper weist eine Erstreckung in einer axialen Richtung der Ringpresse, eine Erstreckung in einer radialen Richtung der Ringpresse und eine Erstreckung in einer Umfangsrichtung der Ringpresse auf. Der Werkzeugkörper weist einen Befestigungsabschnitt und einen Arbeitsabschnitt auf, wobei der Befestigungsabschnitt und der Arbeitsabschnitt an zwei sich in radialer Richtung der Ringpresse gegenüberliegenden Seiten des Werkzeugkörpers ausgebildet sind. Der Befestigungsabschnitt ist ausgebildet, das Werkzeug an einer Ringpresse zu befestigen. Hierfür kann der Befestigungsabschnitt beispielsweise geeignete Vorsprünge, Nuten oder Gewinde aufweisen, die mit Nuten, Vorsprüngen oder Gewinden der Ringpresse in Eingriff kommen können. Der Arbeitsabschnitt weist eine Tangentialfläche auf, die eine Mantelfläche eines geraden Zylinders ist. Mit anderen Worten weist der Arbeitsabschnitt insgesamt die Form einer Rinne auf. Dabei kann die Krümmung der Rinne in eine Richtung quer zu einer Längserstreckung der Rinne konstant sein, oder sich ändern. Der Arbeitsabschnitt ist ausgebildet, Druck auf einen Mantel eines Abgaskonverters auszuüben. Weiter weist der Arbeitsabschnitt eine Vielzahl von Vertiefungen auf, wobei die Vertiefungen in radialer Richtung eine größte Tiefe von wenigstens 1/20 mm oder eine größte Tiefe von wenigstens 1/10 mm oder eine größte Tiefe von wenigstens 1/5 mm aufweisen. Diese Vertiefungen werden von der Tangentialfläche ignoriert. In der Folge weist das Werkzeug mehr als einen Bereich auf, in dem der Arbeitsabschnitt des Werkzeuges mit dem Mantel des Abgaskonverters in Anlage kommt.

Um den Innendurchmesser eines rohrförmigen Metallmantels eines Abgaskonverters an den Außendurchmesser eines von dem Metallmantel aufgenommenen Substrates anzupassen, wird der Metallmantel mit dem in dem Metallmantel angeordneten Substrat und der zwischen dem Substrat und dem Metallmantel angeordneten Lagerungsmatte in einer Ringpresse angeordnet und von dieser in Radialrichtung mit Druck beaufschlagt. Ringpressen werden auch als Radialpressen oder (bei vorheriger Erwärmung des zu bearbeitenden Materials) als Radialschmiedemaschinen bezeichnet. Hierfür weist die Ringpresse mehrere in Radialrichtung bewegliche Werkzeuge auf, mit denen Druck auf das Werkstück (hier der Mantel des Abgaskonverters) ausgeübt werden kann. Derartige Werkzeuge werden auch als "Shrinkerbacken" bezeichnet. Damit diese Werkzeuge radial verfahren werden können, ist es erforderlich, dass zwischen in Umfangsrichtung der Ringpresse benachbart angeordneten Werkzeugen jeweils ein Schlitz vorgesehen ist. Aufgrund der zwischen den Werkzeugen verbleibenden Schlitze kann es während der Druckbeaufschlagung des Werkstückes zu Materialeinfällen zwischen den Werkzeugen kommen. Dies kann im schlimmsten Fall dazu führen, dass das Werkstück in diesem Bereich einreißt und unbrauchbar wird.

Durch das erfindungsgemäße Vorsehen der Vertiefungen im Arbeitsabschnitt des Werkzeuges wird die Fläche, die mit dem Mantel eines mit Druck zu beaufschlagenden Abgaskonverters in Anlage kommt, reduziert. In der Folge sinkt auch die auf Adhäsion zwischen dem Werkzeug und dem Mantel des Abgaskonverters zurückzuführende Reibung. Die Vertiefungen hinterlüften den Mantel des Abgaskonverters. Somit kann der Mantel des Abgaskonverters relativ zu dem Werkzeug eine Gleitbewegung in Umfangsrichtung des Mantels ausüben. Dies erlaubt es dem von dem Werkzeug unter Druck gesetzten Material des Mantels des Abgaskonverters, sich möglichst flächig zu verteilen. Eine auf eine Umgangslinie des Arbeitsabschnittes des Werkzeuges konzentrierte Faltenbildung des Mantels des Abgaskonverters kann so vermieden werden. Zudem wird durch die Vertiefungen weiterer Raum bereitgestellt, in welchem verdrängtes Material des Mantels kontrolliert ausweichen kann.

Gemäß einer Ausführungsform kommen die Werkzeuge während der Beaufschlagung des Metallmantels mit Druck mit ihrem jeweiligen Arbeitsabschnitt, nicht aber mit ihren Vertiefungen im Arbeitsabschnitt, flächig mit der Außenwand des Metallmantels in Anlage.

Gemäß einer Ausführungsform sind die Werkzeuge nicht dazu ausgebildet, an der Außenwand des Metallmantels abzurollen.

Gemäß einer Ausführungsform schließt der Begriff "eine Vielzahl von Vertiefungen" auch den Fall ein, in dem der Arbeitsabschnitt eine einzige Vertiefung oder mehr als eine Vertiefung aufweist. Gemäß einer alternativen Ausführungsform schließt der Begriff "eine Vielzahl von Vertiefungen" den Fall ein, in dem der Arbeitsabschnitt wenigstens zwei Vertiefungen aufweist.

Gemäß einer Ausführungsform entspricht die Form des Arbeitsabschnittes des Werkzeuges einer gewünschten Endform des Mantels des Abgaskonverters. Gemäß einer Ausführungsform weist die Tangentialfläche des Arbeitsabschnittes eine Krümmung auf, die der gewünschten Krümmung des Mantels des Abgaskonverters entspricht.

Gemäß einer Ausführungsform weisen die Vertiefungen in radialer Richtung eine größte Tiefe von höchstens 20 mm oder eine größte Tiefe von höchstens 10 mm oder eine größte Tiefe von höchstens 5 mm oder eine größte Tiefe von höchstens 2 mm oder eine größte Tiefe von höchstens 0,5 mm auf. Bei geringen Tiefen der Vertiefung kann sichergestellt werden, dass der Mantel des unter Druck gesetzten Abgaskonverters gleichwohl flächig mit dem Arbeitsabschnitt des Werkzeuges in Anlage kommt.

Gemäß einer Ausführungsform erstreckt sich wenigstens eine Vertiefung in axialer Richtung oder in Umfangsrichtung über die ganze Erstreckung des Arbeitsabschnittes. Mit anderen Worten wird der Arbeitsabschnitt von der Vertiefung vollständig durchlaufen.

Gemäß einer Ausführungsform erstrecken sich alle Vertiefungen in axialer Richtung oder in Umfangsrichtung über die ganze Erstreckung des Arbeitsabschnittes.

Gemäß einer Ausführungsform schneiden sich die Vertiefungen nicht.

Gemäß einer Ausführungsform sind die Vertiefungen voneinander paarweise gleich weit beabstandet. Somit sind die Vertiefungen zumindest in Abschnitten des Arbeitsabschnittes des Werkzeuges regelmäßig angeordnet.

Gemäß einer Ausführungsform beträgt ein Winkelabstand zwischen benachbarten Vertiefungen zwischen 1° und 5° und insbesondere 2°, bezogen auf einen Mittelpunkt des der von der Tangentialfläche des Arbeitsabschnittes beschriebenen Mantelfläche zugehörigen Zylinders.

Gemäß einer Ausführungsform beträgt ein Abstand zwischen benachbarten Vertiefungen zwischen 10 mm und 2 mm oder zwischen 6 mm und 4 mm.

Gemäß einer Ausführungsform weisen die Vertiefungen jeweils eine Erstreckung in Längsrichtung und eine Erstreckung in Querrichtung auf, wobei die Erstreckung in Längsrichtung und die Erstreckung in Querrichtung zueinander sowie zur Erstreckung in radialer Richtung orthogonal sind, und wobei die Erstreckung in Längsrichtung wenigstens 20-mal so groß wie die Erstreckung in Querrichtung oder die Erstreckung in Längsrichtung wenigstens 80-mal so groß wie die Erstreckung in Querrichtung ist. Somit weisen die Vertiefungen eine langgestreckte Form auf. Gemäß einer Ausführungsform legt ihre Erstreckung in Längsrichtung die Orientierung einer jeweiligen Vertiefung fest.

Gemäß einer Ausführungsform beträgt eine Erstreckung der Vertiefungen in Querrichtung maximal 10 mm oder maximal 5 mm oder maximal 3 mm. Gemäß einer Ausführungsform beträgt eine Erstreckung der Vertiefungen in Querrichtung maximal dem 5-fachen oder maximal dem 3-fachen oder maximal dem 1-fachen der Wandstärke des Mantels des unter Druck zu setzenden Abgaskonverters. Somit sind die Vertiefungen vergleichsweise schmal.

Gemäß einer Ausführungsform weisen die Vertiefungen jeweils einen Querschnitt auf, dessen Form einem Kreissegment oder einem Trapez entspricht.

Gemäß einer Ausführungsform ist der Arbeitsabschnitt des Werkzeuges zumindest in den Bereichen, in den er frei von Vertiefungen ist, poliert. Somit weist der Arbeitsabschnitt eine glatte Oberfläche auf.

Gemäß einer Ausführungsform ist der Arbeitsabschnitt des Werkzeuges an seinen Übergangsstellen zu den Vertiefungen und/oder seiner Umfangslinie verrundet. Somit weist der Arbeitsabschnitt keine scharfen Kanten auf.

Gemäß einer Ausführungsform weist der Arbeitsabschnitt des Werkzeuges in Umfangsrichtung wenigstens einen ersten und einen dritten Abschnitt auf, in denen Vertiefungen angeordnet sind, und einen zwischen dem ersten und dem dritten Abschnitt angeordneten zweiten Abschnitt auf, der frei von Vertiefungen ist. Dabei erstrecken sich der erste, zweite und dritte Abschnitt in Umfangsrichtung des Werkzeuges über jeweils wenigstens 5 % und jeweils höchstens 50 % des Arbeitsabschnittes. Gemäß einer Ausführungsform sind der erste und dritte Abschnitt benachbart zu einer äußeren Begrenzung des Arbeitsabschnittes des Werkzeuges angeordnet.

Gemäß einer Ausführungsform nehmen die Vertiefungen wenigstens 3 % oder wenigstens 30 % der Fläche des Arbeitsabschnittes ein.

Ausführungsformen einer Ringpresse, die zur Durchführung des vorstehend beschriebenen Verfahrens ausgebildet ist, weisen eine Mehrzahl von Werkzeugen auf, wie sie vorstehend beschrieben sind. Dabei ist die Mehrzahl von Werkzeugen mit ihrem jeweiligen Befestigungsabschnitt in der Ringpresse gehaltert. Weiter ist die Ringpresse ausgebildet, jedes Werkzeug der Mehrzahl von Werkzeugen wahlweise in eine von zwei entgegengesetzten Bewegungsrichtungen zu bewegen, wobei die entgegengesetzten Bewegungsrichtungen entlang von Geraden verlaufen und sich die Bewegungsrichtungen aller Werkzeuge der Mehrzahl von Werkzeugen in einem Punkt schneiden. Derartige Ringpressen werden auch als Radialpressen bezeichnet, da die Druckkraft entlang eines Kreisbandes radial in den unter Druck zu setzenden Körper eingebracht wird.

Gemäß einer Ausführungsform sind die Werkzeuge in der Ringpresse entlang eines Kreises gehaltert, und ist zwischen zwei entlang des Kreises benachbart angeordneten Werkzeugen jeweils ein Luftspalt vorgesehen.

Gemäß einer Ausführungsform sind die Werkzeuge in der Ringpresse entlang eines Ovals gehaltert, und ist zwischen zwei entlang des Ovals benachbart angeordneten Werkzeugen jeweils ein Luftspalt vorgesehen.

Gemäß einer Ausführungsform ist die Ringpresse dazu ausgebildet, eine Rotation eines mit Druck zu beaufschlagenden Körpers während der Druckbeaufschlagung zu unterbinden.

Ausführungsformen eines Abgaskonverters, der beispielsweise mittels des vorstehend beschriebenen Verfahrens beispielsweise unter Verwendung der vorstehend beschriebenen Ringpresse erhältlich ist, weist einen zylindrischen Gehäusemantel aus Blechmaterial, ein im Inneren des Gehäusemantels angeordnetes zylindrisches Substrat und eine zwischen Substrat und Gehäusemantel angeordnete Lagerungsmatte auf. Dabei entspricht der Gehäusemantel dem im Verfahren beschriebenen Metallrohr. Der Gehäusemantel weist eine Mehrzahl und wenigstens drei Vorsprünge auf. Die Vorsprünge weisen in radialer Richtung des Gehäusemantels eine größte Höhe von wenigstens 1/20 mm oder eine größte Höhe von wenigstens 1/10 mm oder eine größte Höhe von wenigstens 1/5 mm auf.

Die Vorsprünge nehmen einen Teil des Materials eines ursprünglich glatten Gehäusemantels des Abgaskonverters auf, und sorgen so dafür, dass der Durchmesser des Gehäusemantels gegenüber seinem ursprünglichen Durchmesser reduziert ist. Weiter erhöhen die Vorsprünge eine Stabilität des Gehäusemantels, und führen zu einer Selbstzentrierung des Gehäusemantels beispielsweise beim Verbinden von Endabschnitten des Gehäusemantels mit Trichtern.

Gemäß einer Ausführungsform weist der zylindrische Gehäusemantel einen kreisförmigen Querschnitt auf. Gemäß einer alternativen Ausführungsform weist der zylindrische Gehäusemantel einen ovalen Querschnitt auf.

Gemäß einer Ausführungsform weisen die Vorsprünge in radialer Richtung des Gehäusemantels eine größte Höhe von höchstens 20 mm oder eine größte Höhe von höchstens 5 mm oder eine größte Höhe von höchstens 2 mm oder eine größte Höhe von höchstens 0,5 mm auf. Weisen die Vorsprünge eine größte Höhe von kleiner 0,8 mm auf, ist der verbleibende Höhenunterschied gut mit Schweißnähten zu überbrücken.

Gemäß einer Ausführungsform erstreckt sich wenigstens ein Vorsprung in axialer Richtung oder in Umfangsrichtung des Gehäusemantels über die ganze Erstreckung des Gehäusemantels. Gemäß einer Ausführungsform erstrecken sich alle Vorsprünge in axialer Richtung oder in Umfangsrichtung des Gehäusemantels über die ganze Erstreckung des Gehäusemantels.

Gemäß einer Ausführungsform sind die Vorsprünge voneinander paarweise gleich weit beabstandet.

Gemäß einer Ausführungsform weisen die Vorsprünge jeweils eine Erstreckung in Längsrichtung und eine Erstreckung in Querrichtung auf, wobei die Erstreckung in Längsrichtung und die Erstreckung in Querrichtung des jeweiligen Vorsprungs zueinander sowie zur Erstreckung in Richtung einer Höhe des jeweiligen Vorsprungs orthogonal sind. Weiter ist die Erstreckung in Längsrichtung wenigstens 20-mal so groß wie die Erstreckung in Querrichtung oder ist die Erstreckung in Längsrichtung wenigstens 80-mal so groß wie die Erstreckung in Querrichtung.

Gemäß einer Ausführungsform beträgt die Erstreckung der Vorsprünge in Querrichtung maximal 10 mm oder maximal 5 mm oder maximal 3 mm.

Gemäß einer Ausführungsform weisen die Vorsprünge jeweils einen Querschnitt auf, dessen Form einem Kreissegment, einem Kreisbogen oder einem Trapez entspricht.

Gemäß einer Ausführungsform weist der Gehäusemantel des Abgaskonverters in Umfangsrichtung wenigstens einen ersten und einen dritten Abschnitt auf, in dem Vorsprünge angeordnet sind, und weist der Gehäusemantel des Abgaskonverters in Umfangsrichtung einen zwischen dem ersten und dem dritten Abschnitt angeordneten zweiten Abschnitt auf, der frei von Vorsprüngen ist. Dabei erstrecken sich der erste, zweite und dritte Abschnitt in Umfangsrichtung des Gehäusemantel über jeweils wenigstens 5 % und höchstens 50 % des Gehäusemantels.

Gemäß einer Ausführungsform nehmen die Vorsprünge wenigstens 3 % oder wenigstens 30 % der Fläche des Gehäusemantels ein.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Bei der nachfolgenden Erläuterung eines Ausführungsbeispiels der Erfindung wird auf die beiliegenden Figuren Bezug genommen, von denen
- Figur 1: schematisch eine Querschnittsansicht durch eine Ringpresse gemäß einer Ausführungsform der Erfindung zeigt;
- Figur 2A: schematisch eine Querschnittsansicht durch eine Ausführungsform eines Werkzeuges, welches in der Ringpresse aus Figur 1 verwendet werden kann, zeigt, wobei eine Kante des Werkzeugs vergrößert dargestellt ist;
- Figur 2B: schematisch eine Aufsicht auf einen Teil eines Arbeitsabschnittes des Werkzeuges aus Figur 2A zeigt;
- Figur 3: ein Flussdiagramm einer Ausführungsform eines Verfahrens zur Herstellung eines Abgaskonverters zeigt;
- Figur 4A: schematisch eine Querschnittsansicht durch eine Ausführungsform eines Abgaskonverters zeigt; und
- Figur 4B: schematisch eine Aufsicht auf einen Gehäusemantel des Abgaskonverters aus Figur 4A zeigt.

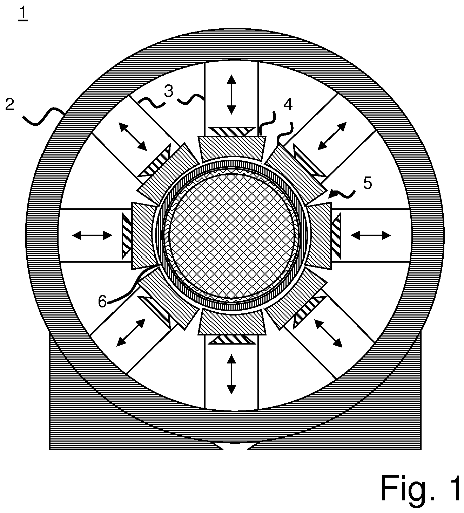

In Figur 1 ist schematisch eine Querschnittsansicht durch eine Ringpresse 1 gemäß einer Ausführungsform der Erfindung gezeigt.

Die Ringpresse 1 weist einen Maschinenkörper 2 aus Gusseisen auf, der eine Vielzahl von Hydraulikzylindern 3 trägt. Die Hydraulikzylinder 3 erlauben es jeweils, von den Hydraulikzylindern 3 getragene Werkzeuge 4 in einer linearen Translation zwischen zwei Extremstellungen zu verlagern. Dies ist in Figur 1 durch Doppelpfeile symbolisiert. In der gezeigten Ausführungsform sind acht Hydraulikzylinder 3 so entlang eines Ringes angeordnet, dass die von den Hydraulikzylindern 3 getragenen Werkzeuge 4 in Richtung auf einen gemeinsamen Punkt hin bewegt und in Richtung von diesem gemeinsamen Punkt weg bewegt werden können. Wird die Anordnung der Hydraulikzylinder 3 entlang des Ringes berücksichtigt, führen die Werkzeuge jeweils eine Bewegung in eine radiale Richtung der Ringpresse 1 aus.

Es wird betont, dass die vorliegende Erfindung nicht auf Maschinenkörper aus Gusseisen oder hydraulisch betätigte Zylinder beschränkt ist. Alternativ können die Zylinder beispielsweise pneumatisch oder durch ein Schraubengetriebe verfahren werden. Auch die Zahl und/oder Anordnung der Zylinder kann variiert werden.

Über die von den Hydraulikzylindern 3 getragenen Werkzeuge 4 ist es der Ringpresse 1 möglich, Kraft auf ein im Zentrum der Ringpresse 1 angeordnetes Werkstück (hier der Gehäusemantel eines Abgaskonverters 6) auszuüben. Dabei sind die Hydraulikzylinder 3 so elektrisch oder mechanisch gekoppelt, dass entweder alle Werkzeuge 4 eine Bewegung zum Werkstück hin oder alle Werkzeuge 4 eine Bewegung vom Werkstück weg ausüben, und von jedem Hydraulikzylinder 3 eine gleich große Kraft auf das Werkstück ausgeübt wird. Damit sich die von den Hydraulikzylindern 3 bewegten Werkzeuge 4 nicht selber blockieren, ist zwischen entlang der Umfangsrichtung der Ringpresse 1 benachbart angeordneten Werkzeugen 4 jeweils ein ausreichend dimensionierter Luftspalt 5 vorgesehen. Dieser Luftspalt 5 ist so bemessen, dass er weitgehend geschlossen ist, wenn die Werkzeuge eine radial innenliegende Zielposition erreicht haben. Beispielsweise kann der Abstand zwischen zwei Werkzeugen 4 in Umfangsrichtung der Radialpresse 1 und damit der Luftspalt 5 in der Zielposition der Werkzeuge 4 weniger als 1 mm betragen.

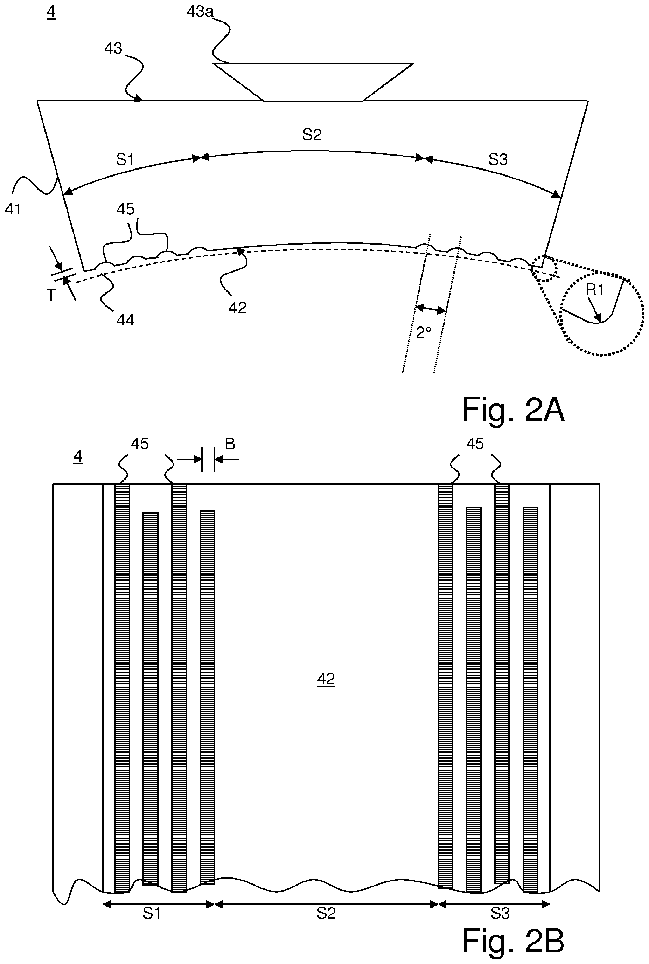

Im Folgenden werden unter Bezugnahme auf die Figuren 2A und 2B die von den Hydraulikzylindern 3 der Ringpresse 1 gehalterten Werkzeuge 4 näher erläutert. Dabei zeigt Figur 2A schematisch eine Querschnittsansicht und Figur 2B schematisch eine Aufsicht auf einen Abschnitt eines Werkzeuges 4 der Mehrzahl von Werkzeugen 4.

Das Werkzeug 4 weist einen massiven Werkzeugkörper 41 auf, der aus gehärtetem Werkzeugstahl gebildet ist. Der Werkzeugkörper 41 weist auf einer Seite einen Arbeitsabschnitt 42 und auf einer gegenüberliegenden Seite einen Befestigungsabschnitt 43 auf. Wie aus der vergrößerten Ansicht der Kante, welche den Arbeitsabschnitt 42 umschließt, hervorgeht, weist das Werkzeug an dieser Kante einen Radius R1 auf. Dieser Radius R1 ist entlang der Längsseiten des Werkzeugs (in Figur 2A rechts vergrößert gezeigt) kleiner 0,5 mm (in der Ausführungsform der Figur 2A beträgt der Radius entlang der Längsseiten 0,3 mm) und entlang der Breitseiten (d. h. orthogonal zu der in Figur 2A vergrößert gezeigten Kante; eine dieser Kanten ist in Figur 2B oben gezeigt) zwischen 1 mm und 3 mm (in der Ausführungsform der Figur 2A beträgt der Radius entlang der Breitseiten 2 mm). Längsseiten von in der Ringpresse 1 benachbart angeordneten Werkzeugen sind parallel zueinander angeordnet und einander paarweise benachbart.

An dem Befestigungsabschnitt 43 ist eine langgestreckte Befestigung 43a aus ungehärtetem Werkzeugstahl mit trapezförmigem Querschnitt befestigt, die in eine entsprechende Ausnehmung an einem Hydraulikzylinder 3 der Ringpresse 1 eingeführt werden kann und so das Werkzeug 4 drehfest an dem zugehörigen Hydraulikzylinder 3 der Ringpresse 1 haltert.

Der Arbeitsabschnitt 42 des Werkzeugkörpers 41 ist insgesamt gekrümmt ausgebildet und ähnelt in seiner Form insgesamt einer flachen Rinne. In der Folge entspricht die dem Arbeitsabschnitt 42 zugehörige Tangentialfläche 44 einem Abschnitt der Mantelfläche eines geraden Zylinders. Der besseren Übersichtlichkeit halber ist in der Figur 2A ein kleiner Abstand zwischen der Tangentialfläche 44 und dem Arbeitsabschnitt 42 eingezeichnet. Tatsächlich schmiegt sich die Tangentialfläche 44 jedoch an den Arbeitsabschnitt 42 an, so dass der Abstand zwischen Tangentialfläche 44 und Arbeitsabschnitt 42 null ist.

Wie gut aus einer Zusammenschau der Figuren 2A und 2B ersichtlich, sind entlang einer Längserstreckung des Arbeitsabschnittes 42 parallele Vertiefungen 45 mit einer Breite B von jeweils 3 mm und einer Tiefe von jeweils 0,5 mm eingebracht. Bezogen auf einen Mittelpunkt des von der Tangentialfläche 44 bestimmten Zylinders beträgt der Winkelabstand zwischen benachbarten Vertiefungen 45 in der gezeigten Ausführungsform 2°. Absolut beträgt der Abstand zwischen den benachbarten Vertiefungen 45 jeweils 3 mm.

Auch wenn in Figur 2B nicht die gesamte Längserstreckung des Werkzeugkörpers 41 des Werkzeuges 4 gezeigt ist, erstrecken sich einige der Vertiefungen 45 in Längsrichtung des Arbeitsabschnittes 42 und damit bei in einer Ringpresse 1 eingesetztem Werkzeug 4 in axialer Richtung der Ringpresse über die gesamte Länge des Werkzeugkörpers 41. Andere Vertiefungen 45 erstrecken sich nicht über die ganze Länge des Arbeitsabschnittes 42, so dass die Vertiefungen 45 unterschiedliche Längen aufweisen. Es ist alternativ aber auch möglich, dass alle Vertiefungen die gleiche Länge aufweisen. Beispielsweise können sich die Vertiefungen bis zu dem Beginn eines Radius R1 erstrecken, welcher an einer Kante des Arbeitsabschnittes 42 ausgebildet ist.

Wie aus Figur 2B ersichtlich, sind die Vertiefungen 45 nicht gleichmäßig über den Arbeitsabschnitt 42 des Werkzeugkörpers 41 des Werkzeuges 4 verteilt. Vielmehr sind in der gezeigten Ausführungsform an den Endabschnitten des Arbeitsabschnittes 42, welche bei in die Ringpresse 1 eingesetztem Werkzeug 4 die Erstreckung des Arbeitsabschnittes 42 in Umfangsrichtung der Ringpresse 1 begrenzen, jeweils zwei Bereiche S1, S3 vorgesehen, in welchen Vertiefungen vorgesehen sind, und ist zwischen diesen beiden Bereichen ein Bereich S2 vorgesehen, der frei ist von Vertiefungen. In der gezeigten Ausführungsform erstrecken sich die Bereiche S1 und S3 jeweils über 25 % der Fläche des Arbeitsabschnittes 42 und der Bereich S2 über 50 % der Fläche des Arbeitsabschnittes 42. Insgesamt nehmen die Vertiefungen 45 in der gezeigten Ausführungsform etwa 25 % der Fläche des Arbeitsabschnittes 42 ein.

Wie aus Figur 2A ersichtlich, weisen die Vertiefungen 45 jeweils einen Querschnitt auf, der einem Kreissegment entspricht. Dabei ist der Übergang der Vertiefungen 45 zum Arbeitsabschnitt verrundet.

Durch das Vorsehen der Vertiefungen 45 weist das der Arbeitsbereich 42 des Werkzeugs 4 mehr als eine Stelle auf, in der der Arbeitsbereich 42 mit dem unter Druck zu setzenden Werkstück in Anlage kommt. In der Folge wird eine Reibung zwischen dem Werkstück und dem Werkzeug 4 reduziert, was ein Abgleiten des Werkstücks gegenüber dem Werkzeug 4 während der Druckbeaufschlagung und im Ergebnis eine bessere Verteilung des infolge des Druckes verdrängten Materials des Werkstückes erlaubt. Auf diese Weise kann verhindert werden, dass es im Luftspalt 5 zwischen zwei in Umfangsrichtung der Ringpresse 1 benachbarten Werkzeugen 4 zu einer unerwünschten übermäßigen Anhäufung von Material kommt, was zu einer Beschädigung des zu bearbeitenden Werkstückes führen könnte.

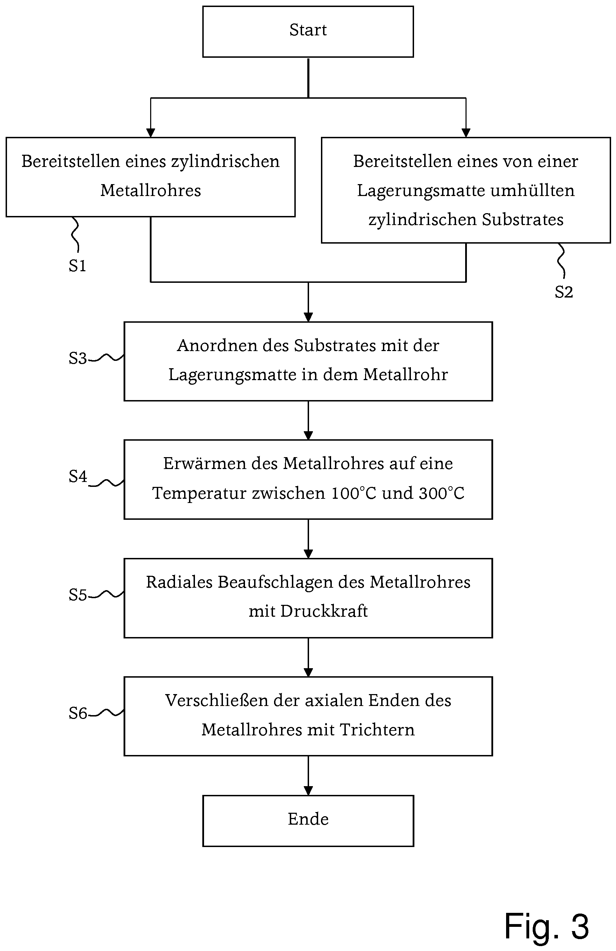

Im Folgenden wird unter Bezugnahme auf die Figur 3 ein Verfahren zur Herstellung eines Abgaskonverters unter Verwendung der in Figur 1 gezeigten Ringpresse 1 mit den Werkzeugen 4 aus den Figuren 2A und 2B erläutert.

Zunächst werden in den Schritten S1 und S2 jeweils ein zylindrisches Metallrohr und ein zylindrisches von einer Lagerungsmatte umhülltes Substrat bereitgestellt. Dabei weist das von der Lagerungsmatte umhüllte Substrat einen kleineren Querschnitt als der Innenquerschnitt des zylindrischen Metallrohres auf. Die Form des Querschnittes des von der Lagerungsmatte umhüllten Substrates entspricht dem Innenquerschnitt des Metallrohres.

Anschließend wird das Substrat mit der Lagerungsmatte in Schritt S3 im Inneren des Metallrohres angeordnet. Dies erfolgt durch Einschieben des Substrates mit der Lagerungsmatte in das Metallrohr.

Hierauf folgt in Schritt S4 ein Erwärmen des Metallrohres auf eine Temperatur von zwischen 100° und 300°, bevor das Metallrohr in Schritt S5 radial mit Druckkraft beaufschlagt wird. Dies erfolgt beispielsweise durch radiales Verschieben der Werkzeuge 4 mittels der Hydraulikzylinder 3 der Ringpresse 1 in Richtung auf das im Inneren der Ringpresse 1 angeordnete Metallrohr 1 hin.

Danach werden die Hydraulikzylinder 3 in ihre Ausgangsposition zurückgefahren und wird das Metallrohr mit dem darin angeordneten Substrat und der Lagerungsmatte entnommen bevor das Metallrohr im abschließenden Schritt S6 an den axialen Enden mit Trichtern verschlossen wird. Dies kann beispielsweise durch Aufstecken der Trichter und Verschweißen der verbleibenden Naht erfolgen.

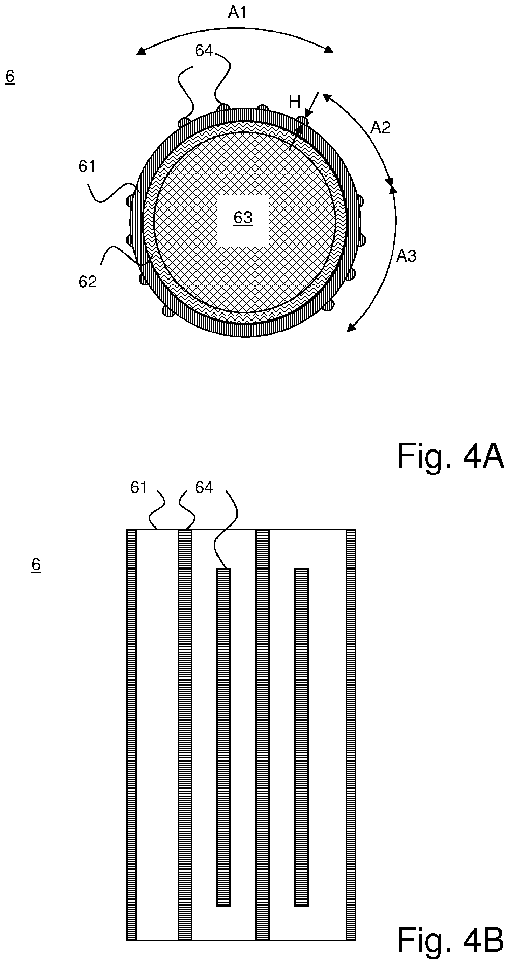

Im Folgenden wird unter Bezugnahme auf die Figuren 4A und 4B ein Abgaskonverter beschrieben, wie er unter Verwendung der in Figur 1 gezeigten Ringpresse und des in Figur 3 gezeigten Verfahrens erhalten werden kann.

Der Abgaskonverter 6 weist einen geraden zylindrischen Gehäusemantel 61 aus einem Blechmaterial, vorliegend Edelstahl mit einer Wandstärke von 1,5 mm, auf. Der Durchmesser des Gehäusemantels beträgt 300 mm, die Länge 400 mm. Im Inneren des Gehäusemantels 61 ist ein zylindrisches keramisches Substrat 63 mit einem Durchmesser von 290 mm und einer Länge von 380 mm angeordnet. Zwischen dem Substrat 63 und dem Gehäusemantel 61 ist eine Lagerungsmatte 62 aus Aluminiumsilikat angeordnet. Der Gehäusemantel 61 setzt dabei die Lagerungsmatte 62 bezogen auf das Substrat 63 leicht unter Druck.

An seiner Außenseite weist der Gehäusemantel 61 in der gezeigten Ausführungsform zwölf Vorsprünge 64 auf, die eine Höhe von 0,5 mm aufweisen. Die geringe Anzahl an in den Figur 3A und 3B gezeigten Vorsprüngen 64 wurde der besseren Darstellbarkeit wegen gewählt. Da jedes der in die Ringpresse 1 aus Figur 1 eingesetzten Werkzeuge 4 gemäß den Figuren 2A und 2B acht Vertiefungen aufweist, und in die Ringpresse 1 acht Werkzeuge 4 eingesetzt sind, würde die tatsächliche Anzahl an Vorsprüngen wenigstens 64 betragen. Hinzu können noch 8 weitere Vorsprünge kommen, die im Bereich der Ringspalten 5 zwischen in Umfangsrichtung der Ringpresse 1 benachbarten Werkzeugen 4 auftreten.

Wie gut aus der Aufsicht aus Figur 3B ersichtlich, erstrecken sich die Vorsprünge 64 geradlinig und mit gleichen konstanten Abständen zwischen benachbarten Vorsprüngen. Einige der Vorsprünge 64 erstrecken sich über die ganze Längserstreckung des Gehäusemantels 61, andere Vorsprünge 64 erstrecken sich nicht über die ganze Längserstreckung des Gehäusemantels 61, so dass die Vorsprünge 64 unterschiedliche Längen aufweisen. Es ist alternativ aber auch möglich, dass alle Vorsprünge 64 die gleiche Länge aufweisen..

Der Form der Vertiefungen 45 in dem Arbeitsbereich 42 der Werkzeuge 4 entsprechend weisen die Vorsprünge 64 jeweils einen Querschnitt auf, der einem Kreissegment entspricht.

Bei Verwendung der in Figur 1 gezeigten Ringpresse 1 mit den in Figur 2A und 2B gezeigten Werkzeugen 4 würden die Vorsprünge 25 % der Fläche des Gehäusemantels 61 des Abgaskonverters 6 einnehmen. Dies ist aus den Figuren 3A und 3B so nicht gezeigt.

Die Vorsprünge 64 erleichtern ein Zentrieren bei einem Anschluss eines (nicht gezeigten) Metalltrichters an die axialen Enden des Gehäusemantels 61. Aufgrund der geringen Höhe der Vorsprünge 64 kann ein verbleibender Spalt leicht geschweißt und geschlossen werden. Weiter kann in den Vorsprüngen 64 Material aufgenommen werden, welches beim Zusammenpressen des Gehäusemantels 61 verdrängt worden ist.

Auch auf der Oberfläche des Gehäusemantels 61 des Abgaskonverters 6 wechseln sich Bereiche A1, A3, in denen Vorsprünge 64 ausgebildet sind, in Umfangsrichtung des Gehäusemantels 61 mit Bereichen A2 ab, die frei von Vorsprüngen sind.

Auch wenn in der vorstehenden Ausführungsform die Vertiefungen in dem Arbeitsabschnitt des Werkzeuges parallel zu einer axialen Richtung des in die Ringpresse eingesetzten Werkzeuges orientiert sind, ist die vorliegende Erfindung hierauf nicht beschränkt. Vielmehr können die Vertiefungen auch einen Winkel zu dieser axialen Richtung einschließen, und sogar orthogonal zu dieser axialen Richtung orientiert sein.

Auch wenn in der vorstehenden Ausführungsform die Vorsprünge auf dem Gehäusemantel des Abgaskonverters parallel zu einer axialen Richtung des Gehäusemantel orientiert sind, ist die vorliegende Erfindung hierauf nicht beschränkt. Vielmehr können die Vorsprünge auch einen Winkel zu dieser axialen Richtung einschließen, und sogar orthogonal zu dieser axialen Richtung orientiert sein.

Auch wenn sich in den vorstehenden Ausführungsformen die Vertiefungen in dem Arbeitsabschnitt des Werkzeuges und die entsprechenden Vorsprünge auf dem Gehäusemantel des Abgaskonverters geradlinig erstrecken, ist die vorliegende Erfindung hierauf nicht begrenzt. Vielmehr können die Vertiefungen und Vorsprünge auch gekrümmt verlaufen. Weiter ist es nicht erforderlich, dass sich die Vertiefungen und Vorsprünge über die ganze Erstreckung des Arbeitsabschnittes des Werkzeuges bzw. des Gehäusemantels erstrecken. Es ist nicht einmal erforderlich, dass die Vertiefungen und Vorsprünge länglich ausgebildet sind. Alternativ können die Vertiefungen und Vorsprünge beispielsweise in Aufsicht auch eine Kreisform aufweisen.

Obwohl die voranstehenden Ausführungsbeispiele der vorliegenden Erfindung lediglich beispielhaft erläutert worden sind, werden die Fachleute erkennen, dass zahlreiche Modifikationen, Hinzufügungen und Ersetzungen möglich sind, ohne von dem Schutzbereich der in den nachfolgenden Ansprüchen offenbarten Erfindung abzuweichen.

## Patentansprüche

1. Verfahren zur Herstellung eines Abgaskonverters, aufweisend:
(S1) Bereitstellen eines zylindrischen Metallrohres (61);
(S2) Bereitstellen eines zylindrischen Substrates (63), welches in Umfangsrichtung von einer Lagerungsmatte (62) umhüllt ist, wobei der Querschnitt des Substrates (63) einschließlich der Lagerungsmatte (62) kleiner oder gleich dem Querschnitt des Metallrohres ist;
(S3) Anordnen des Substrates (63) mit der umgebenden Lagerungsmatte (62) in dem Metallrohr (61); und
(S5) Beaufschlagen des Metallrohres (61) mit Druckkraft, welche Druckkraft in radialer Richtung des Metallrohres (61) orientiert ist, um den Querschnitt des Metallrohres (61) auf ein vorgegebenes Maß zu verkleinern,
**dadurch gekennzeichnet, dass**
sich im Schritt (S5) des Beaufschlagens des Metallrohres (61) mit Druckkraft in Umfangsrichtung des Metallrohres (61) Bereiche, die mit Druckkraft beaufschlagt werden und Bereiche, die nicht mit Druckkraft beaufschlagt werden, abwechseln; und
die Anzahl der Bereiche, in denen das Metallrohr (61) nicht mit Druckkraft beaufschlagt wird, größer als eine Anzahl der für die Druckbeaufschlagung verwendeten Werkzeuge (4) ist.

2. Werkzeug (4) für eine Ringpresse (1), das Werkzeug (4) aufweisend einen Werkzeugkörper (41),
wobei der Werkzeugkörper (41) eine Erstreckung in einer axialen Richtung der Ringpresse (1), eine Erstreckung in einer radialen Richtung der Ringpresse (1) und eine Erstreckung in einer Umfangsrichtung der Ringpresse (1) aufweist; wobei der Werkzeugkörper (41) einen Befestigungsabschnitt (43) und einen Arbeitsabschnitt (42) aufweist, wobei der Befestigungsabschnitt (43) und der Arbeitsabschnitt (42) an zwei sich in radialer Richtung der Ringpresse (1) gegenüberliegenden Seiten des Werkzeugkörpers (41) ausgebildet sind;
wobei der Befestigungsabschnitt (43) ausgebildet ist, das Werkzeug (4) an einer Ringpresse (1) zu befestigen;
wobei der Arbeitsabschnitt (42) eine Tangentialfläche (44) aufweist, die eine Mantelfläche eines geraden Zylinders ist und ausgebildet ist, Druck auf einen Mantel (61) eines Abgaskonverters (6) auszuüben; und
wobei der Arbeitsabschnitt (42) eine Vielzahl von Vertiefungen (45) aufweist,
**dadurch gekennzeichnet, dass**
die Vertiefungen (45) in radialer Richtung der Ringpresse eine größte Tiefe von wenigstens 1/20 mm oder eine größte Tiefe von wenigstens 1/10 mm oder eine größte Tiefe von wenigstens 1/5 mm aufweisen und
die Vertiefungen (45) in axialer Richtung der Ringpresse (1) orientiert und voneinander in Umfangsrichtung der Ringpresse (1) beabstandet sind.

3. Werkzeug (4) nach Anspruch 2, wobei die Vertiefungen (45) in radialer Richtung eine größte Tiefe von höchstens 20 mm oder eine größte Tiefe von höchstens 10 mm oder eine größte Tiefe von höchstens 2 mm oder eine größte Tiefe von höchstens 0,8 mm aufweisen.

4. Werkzeug (4) nach Anspruch 2 oder 3,
wobei sich wenigstens eine Vertiefung (45) in axialer Richtung über die ganze Erstreckung des Arbeitsabschnittes (42) erstreckt; oder
wobei sich alle Vertiefungen (45) in axialer Richtung über die ganze Erstreckung des Arbeitsabschnittes (42) erstrecken

5. Werkzeug (4) nach einem der Ansprüche 2 bis 4,
wobei die Vertiefungen (45) jeweils eine Erstreckung in Längsrichtung und eine Erstreckung in Querrichtung aufweisen, wobei die Erstreckung in Längsrichtung und die Erstreckung in Querrichtung zueinander sowie zur Erstreckung in radialer Richtung orthogonal sind;
wobei die Erstreckung in Längsrichtung wenigstens 20 mal so groß wie die Erstreckung in Querrichtung oder die Erstreckung in Längsrichtung wenigstens 80 mal so groß wie die Erstreckung in Querrichtung ist; und
wobei die Erstreckung (B) der Vertiefungen in Querrichtung maximal 10 mm oder maximal 5 mm oder maximal 3 mm beträgt.

6. Werkzeug (4) nach einem der Ansprüche 2 bis 5,
wobei der Arbeitsabschnitt (42) in Umfangsrichtung wenigstens einen ersten Abschnitt (S1) und einen dritten Abschnitt (S3) aufweist, in dem Vertiefungen (45) angeordnet sind, und einen zwischen dem ersten und dem dritten Abschnitt (S1, S3) angeordneten zweiten Abschnitt (S2) aufweist, der frei von Vertiefungen (45) ist; und
wobei sich der erste, zweite und dritte Abschnitt (S1, S2, S3) in Umfangsrichtung des Werkzeuges über jeweils wenigstens 5 % und höchstens 50 % des Arbeitsabschnittes erstrecken.

7. Werkzeug (4) nach einem der Ansprüche 2 bis 6, wobei die Vertiefungen (45) wenigstens 3 % oder wenigstens 30 % der Fläche des Arbeitsabschnittes (42) einnehmen.

8. Ringpresse (1) aufweisend eine Mehrzahl von Werkzeugen (4) nach einem der Ansprüche 2 bis 7, welche insbesondere zur Durchführung des Verfahrens nach Anspruch 1 geeignet ist,
wobei die Mehrzahl von Werkzeugen (4) mit ihrem jeweiligen Befestigungsabschnitt (43) in der Ringpresse (1) gehaltert ist; und
wobei die Ringpresse (1) ausgebildet ist, jedes Werkzeug (4) der Mehrzahl von Werkzeugen (4) wahlweise in eine von zwei entgegengesetzten Bewegungsrichtungen zu bewegen, wobei die entgegengesetzten Bewegungsrichtungen entlang von Geraden verlaufen und sich die Bewegungsrichtungen aller Werkzeuge (4) der Mehrzahl von Werkzeugen (4) in einem Punkt schneiden.

9. Abgaskonverter (6) aufweisend:
einen zylindrischen Gehäusemantel (61) aus Blechmaterial;
ein im Inneren des Gehäusemantels (61) angeordnetes zylindrisches Substrat (63); und
eine zwischen Substrat (63) und Gehäusemantel (61) angeordnete Lagerungsmatte (62);
**dadurch gekennzeichnet, dass**
der Gehäusemantel (61) wenigstens drei in axialer Richtung des Gehäusemantels (61) orientierte und voneinander in Umfangsrichtung des Gehäusemantels (61) beabstandete Vorsprünge (64) aufweist, und
die Vorsprünge (64) in radialer Richtung des Gehäusemantels (61) eine größte Höhe von wenigstens 1/20 mm oder eine größte Höhe von wenigstens 1/10 mm oder eine größte Höhe von wenigstens 1/5 mm aufweisen.

10. Abgaskonverter (6) nach Anspruch 9, wobei die Vorsprünge (64) in radialer Richtung des Gehäusemantels (61) eine größte Höhe von höchstens 20 mm oder eine größte Höhe von höchstens 5 mm oder eine größte Höhe von höchstens 2 mm oder größte Höhe von höchstens 0,5 mm aufweisen.

11. Abgaskonverter (6) nach Anspruch 9 oder 10,
wobei sich wenigstens ein Vorsprung (64) in axialer Richtung des Gehäusemantels (61) über die ganze Erstreckung des Gehäusemantels (61) erstreckt; oder
wobei sich alle Vorsprünge (64) in axialer Richtung des Gehäusemantels (61) über die ganze Erstreckung des Gehäusemantels (61) erstrecken.

12. Abgaskonverter (6) nach Anspruch 9, 10 oder 11, wobei die Vorsprünge (64) voneinander paarweise gleich weit beabstandet sind.

13. Abgaskonverter (6) nach einem der Ansprüche 9 bis 12,
wobei die Vorsprünge (64) jeweils eine Erstreckung in Längsrichtung und eine Erstreckung in Querrichtung aufweisen, wobei die Erstreckung in Längsrichtung und die Erstreckung in Querrichtung des jeweiligen Vorsprungs zueinander sowie zur Erstreckung in Richtung einer Höhe des jeweiligen Vorsprungs (64) orthogonal sind;
wobei die Erstreckung in Längsrichtung wenigstens 20 mal so groß wie die Erstreckung in Querrichtung oder die Erstreckung in Längsrichtung wenigstens 80 mal so groß wie die Erstreckung in Querrichtung ist; und
wobei die Erstreckung der Vorsprünge (64) in Querrichtung maximal 10 mm oder maximal 5 mm oder maximal 3 mm beträgt.

14. Abgaskonverter (6) nach einem der Ansprüche 9 bis 13, wobei die Vorsprünge (64) wenigstens 5 % oder wenigstens 30 % der Fläche des Gehäusemantels (61) und höchstens 50 % der Fläche des Gehäusemantels (61) einnehmen.

## Claims

1. A method for the manufacture of an exhaust gas converter, comprising:
(S1) providing a cylindrical metal pipe (61);
(S2) providing a cylindrical substrate (63) surrounded in its circumferential direction by a mat mount (62), the cross-section of the substrate (63) including the mat mount (62) being smaller or equal the cross-section of the metal pipe;
(S3) disposing the substrate (63) with the mat mount (62) surrounding it inside the metal pipe (61); and
(S5) exerting a compression force on the metal pipe (61), the compression force being directed in a radial direction of the metal pipe (61) for reducing the cross-section of the metal pipe (61) to a desired size;
**characterized in that**
in step (S5) of exerting a compression force on the metal pipe (61), regions to which a compression force is applied alternate along the circumferential direction of the metal pipe (61) with regions to which no compression force is applied; and
the number of regions where no compression force is applied to the metal pipe (61) exceeds the number of tools (4) used for applying the compression force.

2. A tool (4) for a ring press (1), the tool (4) comprising a tool body (41),
wherein the tool body (41) has an extension in an axial direction of the ring press (1), an extension in a radial direction of the ring press (1), and an extension in a circumferential direction of the ring press (1);
wherein the tool body (41) comprises a mounting section (43) and a work section (42), the mounting section (43) and the work section (42) being formed on two, opposite sides of the tool body (41) with respect to the radial direction of the ring press (1);
wherein the mounting section (43) is configured for fixing the tool (4) on a ring press (1);
wherein the work section (42) has a tangential surface (44) having a shape of a right cylinder's lateral area and being configured for exerting compression on an encasement (61) of an exhaust gas converter (6); and
wherein the work section (42) comprises a plurality of recesses (45),
**characterized in that**
the recesses (45) have a maximum depth along the radial direction of the ring press of at least 1/20 mm, or a maximum depth of at least 1/10 mm, or a maximum depth of at least 1/5 mm and
the recesses (45) are oriented in the axial direction of the ring press (1) and are spaced apart from one another in the circumferential direction of the ring press (1).

3. The tool (4) of claim 2, wherein the recesses (45) have along the radial direction a maximum depth of not more than 20 mm, or a maximum depth of not more than 10 mm, or a maximum depth of not more than 2 mm, or a maximum depth of not more than 0.8 mm.

4. The tool (4) of claims 2 or 3,
wherein at least one recess (45) extends across the whole of the extension of the work section (42) in the axial direction; or
wherein all recesses (45) extend in the axial direction across the whole of the extension of the work section (42).

5. The tool (4) of one of claims 2 to 4,
wherein the recesses (45) each have an extension in the longitudinal direction and an extension in the transverse direction, the extension in the longitudinal direction and the extension in the transverse direction being orthogonal with respect to each other and orthogonal with respect to the extension in the radial direction;
wherein the extension in the longitudinal direction is at least 20 times as long as the extension in the transverse direction, or the extension in the longitudinal direction is at least 80 times as long as the extension in the transverse direction; and
wherein the extension (B) of the recesses in the transverse direction does not exceed 10 mm, or does not exceed 5 mm, or does not exceed 3 mm.

6. The tool (4) of one of claims 2 to 5,
wherein the work section (42) comprises at least one first section (S1) and one third section (S3) in the circumferential direction having recesses (45) formed therein, and one second section (S2) located between the first and the third sections (S1, S3) having no recesses (45) formed therein; and
wherein the first, second, and third sections (S1, S2, S3) each extend across at least 5 % and not more than 50 % of the work section in the circumferential direction of the tool.

7. The tool (4) of one of claims 2 to 6, wherein the recesses (45) occupy at least 3 % or at least 30 % of the work section's (42) surface.

8. A ring press (1) having a plurality of tools (4) according to one of claims 2 to 7 and being in particular configured for performing the method of claim 1, wherein the plurality of tools (4) is fixed in the ring press (1) by its respective mounting section (43); and
wherein the ring press (1) is configured to move each tool (4) of the plurality of tools (4) in either of two opposite directions of movement, the opposite directions of movement following straight lines and the directions of movement of all tools (4) of the plurality of tools (4) intersecting in one point.

9. An exhaust gas converter (6), comprising:
a cylindrical encasement (61) made from sheet material;
a cylindrical substrate (63) disposed inside the encasement (61); and
a mat mount (62) located between the substrate (63) and the encasement (61);
**characterized in that**
the encasement (61) comprises at least three protrusions (64), wherein the protrusions (64) are oriented in an axial direction of the encasement (61) and are spaced apart from one another in a circumferential direction of the encasement (61), and
the protrusions (64) have a maximum height in a radial direction of the encasement (61) of at least 1/20 mm, or a maximum height of at least 1/10 mm,
or a maximum height of at least 1/5 mm.

10. The exhaust gas converter (6) of claim 9, wherein the protrusions (64) in a radial direction of the encasement (61) have a maximum height of not more than 20 mm, or a maximum height of not more than 5 mm, or a maximum height of not more than 2 mm, or a maximum height of not more than 0.5 mm.

11. The exhaust gas converter (6) of claims 9 or 10,
wherein the at least one protrusion (64) extends in the axial direction of the encasement (61) across the whole of the extension of the encasement (61); or wherein all protrusions (64) extend in the axial direction of the encasement (61) across the whole of the extension of the encasement (61).

12. The exhaust gas converter (6) of claim 9, 10, or 11, wherein the protrusions (64) are equidistantly spaced in pairs.

13. The exhaust gas converter (6) of one of claims 9 to 12,
wherein the protrusions (64) each have an extension in the longitudinal direction and an extension in the transverse direction, the extension in the longitudinal direction and the extension in the transverse direction of the respective protrusion being orthogonal with respect to each other and orthogonal with respect to the extension in the direction of a height of the respective protrusion (64);
wherein the extension in the longitudinal direction is at least 20 times as long as the extension in the transverse direction, or the extension in the longitudinal direction is at least 80 times as long as the extension in the transverse direction; and
wherein the extension of the protrusions (64) in the transverse direction is not more than 10 mm, or is not more than 5 mm, or is not more than 3 mm.

14. The exhaust gas converter (6) of one of claims 9 to 13, wherein the protrusions (64) occupy at least 5 % or at least 30 % of the surface of the encasement (61), and not more than 50 % of the surface of the encasement (61).

## Revendications

1. Procédé de fabrication d'un convertisseur de gaz d'échappement, présentant :
(S1) la fourniture d'un tube métallique (61) cylindrique ;
(S2) la fourniture d'un substrat (63) cylindrique qui est enveloppé d'un mat de stockage (62) dans une direction circonférentielle, dans lequel la section transversale du substrat (63), mat de stockage (62) compris, est inférieure ou égale à la section transversale du tube métallique ;
(S3) la disposition du substrat (63) avec le mat de stockage (62) l'entourant dans le tube métallique (61) ; et
(S5) l'application au tube métallique (61) d'une force de compression, laquelle force de compression est orientée dans une direction radiale du tube métallique (61) pour réduire la section transversale du tube métallique (61) à une mesure prédéterminée,
**caractérisé en ce que**
à l'étape (S5) de l'application au tube métallique (61) d'une force de compression dans une direction circonférentielle du tube métallique (61), des zones auxquelles une force de compression est appliquée et des zones auxquelles une force de compression n'est pas appliquée alternent ; et
le nombre de zones dans lesquelles une force de compression n'est pas appliquée au tube métallique (61) est plus grand qu'un nombre d'outils (4) utilisés pour l'application de pression.

2. Outil (4) pour une presse annulaire (1), l'outil (4) présentant un corps d'outil (41), dans lequel le corps d'outil (41) présente une extension dans une direction axiale de la presse annulaire (1), une extension dans une direction radiale de la presse annulaire (1) et une extension dans une direction circonférentielle de la presse annulaire (1) ;
dans lequel le corps d'outil (41) présente un segment de fixation (43) et un segment de travail (42), dans lequel le segment de fixation (43) et le segment de travail (42) sont formés sur deux côtés du corps d'outil (41) opposés à la presse annulaire (1) dans une direction radiale ;
dans lequel le segment de fixation (43) est formé pour fixer l'outil (4) à une presse annulaire (1) ;
dans lequel le segment de travail (42) présente une surface tangentielle (44) qui est une surface d'enveloppe d'un cylindre droit et est formée pour exercer une pression sur une enveloppe (61) d'un convertisseur de gaz d'échappement (6) ; et dans lequel le segment de travail (42) présente une pluralité de creux (45), **caractérisé en ce que**
les creux (45) présentent dans une direction radiale de la presse annulaire, une profondeur la plus grande d'au moins 1/20 mm ou une profondeur la plus grande d'au moins 1/10 mm ou une profondeur la plus grande d'au moins 1/5 mm et
les creux (45) sont orientés dans une direction axiale de la presse annulaire (1) et espacés les uns des autres dans une direction circonférentielle de la presse annulaire (1).

3. Outil (4) selon la revendication 2, dans lequel les creux (45) présentent dans une direction axiale une profondeur la plus grande d'au plus 20 mm ou une profondeur la plus grande d'au plus 10 mm ou une profondeur plus grande d'au plus 2 mm ou une profondeur plus grande d'au plus 0,8 mm.

4. Outil (4) selon la revendication 2 ou 3,
dans lequel au moins un creux (45) s'étend dans une direction axiale sur toute l'extension du segment de travail (42) ; ou
dans lequel tous les creux (45) s'étendent dans une direction axiale sur toute l'extension du segment de travail (42).

5. Outil (4) selon l'une des revendications 2 à 4,
dans lequel les creux (45) présentent respectivement une extension dans une direction longitudinale et une extension dans une direction transversale, dans lequel l'extension dans une direction longitudinale et l'extension dans une direction transversale l'une par rapport à l'autre et par rapport à l'extension dans une direction radiale sont orthogonales ;
dans lequel l'extension dans une direction longitudinale est au moins 20 fois plus grande que l'extension dans une direction transversale ou l'extension dans une direction longitudinale est au moins 80 fois plus grande que l'extension dans une direction transversale ; et
dans lequel l'extension (B) des creux dans une direction transversale est au maximum de 10 mm ou au maximum de 5 mm ou au maximum de 3 mm.

6. Outil (4) selon l'une des revendications 2 à 5,
dans lequel le segment de travail (42) dans une direction circonférentielle présente au moins un premier segment (S1) et un troisième segment (S3), dans lequel des creux (45) sont disposés, et présente un deuxième segment (S2) disposé entre le premier et le troisième segment (S1, S3) qui est dépourvu de creux (45) ; et
dans lequel les premier, deuxième et troisième segments (S1, S2, S3) s'étendent dans une direction circonférentielle de l'outil sur respectivement au moins 5 % et au plus 50 % du segment de travail.

7. Outil (4) selon l'une des revendications 2 à 6, dans lequel les creux (45) occupent au moins 3 % ou au moins 30 % de la surface du segment de travail (42).

8. Presse annulaire (1) présentant une pluralité d'outils (4) selon l'une des revendications 2 à 7, qui est appropriée en particulier pour la réalisation du procédé selon la revendication 1,
dans laquelle la pluralité d'outils (4) sont maintenus avec leur segment de fixation (43) respectif dans la presse annulaire (1) ; et
dans laquelle la presse annulaire (1) est formée pour déplacer chaque outil (4) de la pluralité d'outils (4) sélectivement dans une de deux directions de mouvement opposées, dans laquelle les directions de mouvement opposées évoluent le long de droites et les directions de mouvement de tous les outils (4) de la pluralité d'outils (4) se coupent en un point.

9. Convertisseur de gaz d'échappement (6) présentant :
une enveloppe de boîtier (61) cylindrique en un matériau de tôle ;
un substrat (63) cylindrique disposé à l'intérieur de l'enveloppe de boîtier (61) ; et
un mat de stockage (62) disposé entre substrat (63) et enveloppe de boîtier (61) ; **caractérisé en ce que**
l'enveloppe de boîtier (61) présente au moins trois saillies (64) orientées dans une direction axiale de l'enveloppe de boîtier (61) et espacées les unes des autres dans une direction circonférentielle de l'enveloppe de boîtier (61), et
les saillies (64) présentent dans une direction radiale de l'enveloppe de boîtier (61) une hauteur la plus grande d'au moins 1/20 mm ou une hauteur la plus grande d'au moins 1/10 mm ou une hauteur la plus grande d'au moins 1/5 mm.

10. Convertisseur de gaz d'échappement (6) selon la revendication 9, dans lequel les saillies (64) présentent dans une direction radiale de l'enveloppe de boîtier (61) une hauteur la plus grande d'au plus 20 mm ou une hauteur la plus grande d'au plus 5 mm ou une hauteur la plus grande d'au plus 2 mm ou une hauteur la plus grande d'au plus 0,5 mm.

11. Convertisseur de gaz d'échappement (6) selon la revendication 9 ou 10,
dans lequel au moins une saillie (64) s'étend dans une direction axiale de l'enveloppe de boîtier (61) sur toute sur toute l'extension de l'enveloppe de boîtier (61) ; ou
dans lequel toutes les saillies (64) s'étendent dans une direction axiale de l'enveloppe de boîtier (61) sur toute l'extension de l'enveloppe de boîtier (61).

12. Convertisseur de gaz d'échappement (6) selon la revendication 9, 10 ou 11, dans lequel les saillies (64) sont espacées à égale distance deux à deux les unes des autres.

13. Convertisseur de gaz d'échappement (6) selon l'une des revendications 9 à 12, dans lequel les saillies (64) présentent respectivement une extension dans une direction longitudinale et une extension dans une direction transversale, dans lequel l'extension dans une direction longitudinale et l'extension dans une direction transversale sont orthogonales l'une par rapport à l'autre de la saillie respective et par rapport à l'extension dans la direction d'une hauteur de la saillie (64) respective ;
dans lequel l'extension dans une direction longitudinale est au moins 20 fois plus grande que l'extension dans une direction transversale ou l'extension dans une direction longitudinale est au moins 80 fois plus grande que l'extension dans une direction transversale ; et
dans lequel l'extension des saillies (64) dans une direction transversale est au maximum de 10 mm ou au maximum de 5 mm ou au maximum de 3 mm.

14. Convertisseur de gaz d'échappement (6) selon l'une des revendications 9 à 13, dans lequel les saillies (64) occupent au moins 5 % ou au moins 30 % de la surface de l'enveloppe de boîtier (61) et au plus 50 % de la surface de l'enveloppe de boîtier (61).
